# EUROPEAN PATENT APPLICATION

(11) **EP 4 761 416 A1**
(43) Date of publication of application: **17.06.2026**
(21) Application number: 24850512.5
(22) Date of filing: 21.03.2024
(51) Int. Cl.: H04W 72/11, H04W 72/21

(54) **INDICATION INFORMATION PROCESSING METHOD AND APPARATUS**

(30) Priority: 10.08.2023 CN 202311010513
(71) Applicant: InterDigital Patent Holdings, Inc., Wilmington, DE 19809 (US)
(72) Inventor: ZHANG, Jian, Shenzhen, Guangdong 518040 (CN)
(74) Representative: AWA Sweden AB
(86) International application number: PCT/CN2024/082931
(87) International publication number: WO 2025/030853

(57) **Abstract**

Embodiments of the present application provide an indication information processing method and apparatus. The method includes: receiving first signaling sent by a network device; determining, according to the first signaling, a first transmission occasion (TO) from among a plurality of TOs within a first reporting period, the plurality of TOs being indicated by at least two configured grant (CG) configurations; and sending first indication information on the first TO, the first indication information being used to indicate TO usage status within the first reporting period. According to the technical solution of the present application, by means of the indication of the first signaling, reporting of TO usage status can be effectively implemented even in a scenario involving multiple CG configuration.

## Description

The present application claims priority to Chinese Patent Application No. 202311010513.6, filed with the China National Intellectual Property Administration on August 10, 2023, and entitled "INDICATION INFORMATION PROCESSING METHOD AND APPARATUS", the entirety of which is incorporated herein by reference.

### TECHNICAL FIELD

The present application relates to the field of communications, and in particular, to an indication information processing method and apparatus.

### BACKGROUND ART

Semi-persistent scheduling is a scheduling method in which transmission resources are preconfigured in accordance with periodicity, and CG resources may be periodically reserved for a terminal device via a CG configuration.

In order to improve system capacity, a CG enhancement method is proposed, in which one PUSCH within one CG period is split into a plurality of PUSCHs for transmission, and PUSCH TOs not used by a UE are indicated in advance through reporting information. Meanwhile, a network device can currently send multiple CG configurations to a terminal device.

However, for multiple CG configurations, currently, there is currently no effective solution regarding how to indicate the usage status of PUSCH TOs through reporting information.

### SUMMARY OF THE INVENTION

Embodiments of the present application provide an indication information processing method and apparatus, which are applied to the technical field of communications.

In a first aspect, an embodiment of the present application proposes an indication information processing method. The method is applied to a terminal device, and comprises:
receiving first signaling sent by a network device;
determining, according to the first signaling, a first transmission occasion (TO) from among a plurality of TOs within a first reporting period, the plurality of TOs being indicated by at least two configured grant (CG) configurations; and
sending first indication information on the first TO, the first indication information being used to indicate a usage status of the TOs within the first reporting period.

In this implementation, by means of the indication of the first signaling, the first TO is determined from among the plurality of TOs within the first reporting period, so that specific TOs for information reporting among the plurality of TOs indicated by the plurality of CG configurations can be clearly specified; and then the first indication information is sent on the determined first TO, so that TO usage status can be effectively reported in a scenario involving multiple CG configurations.

In a possible design, the first signaling comprises a first field, and the first field is used to indicate a first CG configuration set permitted for transmission of the first indication information.

In this implementation, by means of the first field, it is possible to effectively indicate which CG configurations have TOs that can be used to send the first indication information.

In a possible design, the first signaling further comprises a second field, the second field is used to indicate a second CG configuration set, and the first indication information is used to indicate TO usage status of the second CG configuration set within a reporting period.

In this implementation, by means of the second field, it is possible to effectively indicate the specific CG configurations whose TO usage status is indicated by the first indication information.

In a possible design, the first signaling further comprises a third field, and the third field is used to indicate whether physical uplink control channels (PUSCHs) are simultaneously sent on a plurality of overlapping TOs.

In this implementation, by means of the third field, it is possible to effectively indicate the sending mode of PUSCH when the TOs overlap in a scenario involving multiple CG configurations.

In a possible design, the first signaling further comprises a fourth field, and the fourth field is used to indicate whether the first indication information is carried in each of a plurality of simultaneously sent PUSCHs when the PUSCHs are simultaneously sent on the plurality of overlapping TOs.

In this implementation, by means of the fourth field, it is possible to effectively indicate the sending mode of the first indication information when the PUSCHs are simultaneously sent on the plurality of overlapping TOs in a scenario involving multiple CG configurations.

In a possible design, the determining, according to the first signaling, a first TO from among a plurality of TOs within a first reporting period comprises:
for any TO among the plurality of TOs, if there is no TO overlapping with the TO, and a CG configuration corresponding to the TO is included in the first CG configuration set, determining the TO as the first TO.

In a possible design, the determining, according to the first signaling, a first TO from among a plurality of TOs within a first reporting period comprises:
for any TO among the plurality of TOs, if there is another TO overlapping with the TO, and CG configurations respectively corresponding to the plurality of overlapping TOs are all included in the first CG configuration set, determining the first TO from among the plurality of overlapping TOs according to the third field.

In a possible design, the determining the first TO from among the plurality of overlapping TOs according to the third field comprises:
if the third field indicates that PUSCHs are not simultaneously sent on the plurality of overlapping TOs, determining a TO indicated as to be used from among the plurality of overlapping TOs as the first TO; and
if the third field indicates that PUSCHs are simultaneously sent on the plurality of overlapping TOs, determining the first TO from among the plurality of overlapping TOs according to the fourth field.

In a possible design, the determining the first TO from among the plurality of overlapping TOs according to the fourth field comprises:
if the fourth field indicates that the first indication information is carried in each of the plurality of simultaneously sent PUSCHs, determining each of the plurality of overlapping TOs as the first TO; and
if the fourth field indicates that the first indication information is not carried in each of the plurality of simultaneously sent PUSCHs, determining a target TO among the plurality of overlapping TOs as the first TO.

In a possible design, the target TO is a TO corresponding to a predefined CG configuration among the plurality of overlapping TOs.

In a possible design, the predefined CG configuration is a first CG configuration in the first CG configuration set; or
the predefined CG configuration is a CG configuration with the smallest sequence number in the first CG configuration set.

In this implementation, for various possible TO distribution cases caused by the presence of multiple CG configurations, by means of each field in the first signaling, it is possible to correctly and effectively determine the first TO that is used to send the first indication information.

In a possible design, the first indication information comprises bits of TOs corresponding to CG configurations in a second CG configuration set within the first reporting period, and the bits are used to indicate whether the terminal device uses a corresponding TO.

In a possible design, the bits are sorted in a chronological order of the TOs, and for a plurality of TOs that overlap in time, the bits are further sorted in an order of corresponding CG configurations in the second CG configuration set.

In a possible design, the bits are sorted in an order of the CG configurations in the second CG configuration set, and for TOs corresponding to each CG configuration, the bits are further sorted in a chronological order of the TOs.

In this implementation, accurate and orderly encoding of the first indication information can be achieved, so that the first indication information can effectively indicate TO usage status within the first reporting period.

In a possible design, the first signaling is radio resource control (RRC) signaling.

In a possible design, the first indication information is uplink control information (UCI).

In a second aspect, an embodiment of the present application proposes an indication information processing method. The method is applied to a network device, and comprises:
sending first signaling to a terminal device;
determining, according to the first signaling, a first TO from among a plurality of TOs within a first reporting period, the plurality of TOs being indicated by at least two CG configurations; and
receiving first indication information on the first TO, the first indication information being used to indicate TO usage status within the first reporting period.

In a possible design, the first signaling comprises a first field, and the first field is used to indicate a first CG configuration set permitted for transmission of the first indication information.

In a possible design, the first signaling further comprises a second field, the second field is used to indicate a second CG configuration set, and the first indication information is used to indicate TO usage status of the second CG configuration set within a reporting period.

In a possible design, the first signaling further comprises a third field, and the third field is used to indicate whether PUSCHs are simultaneously sent on a plurality of overlapping TOs.

In a possible design, the first signaling further comprises a fourth field, and the fourth field is used to indicate whether the first indication information is carried in each of a plurality of simultaneously sent PUSCHs when the PUSCHs are simultaneously sent on the plurality of overlapping TOs.

In a possible design, the determining, according to the first signaling, a first TO from among a plurality of TOs within a first reporting period comprises:
for any TO among the plurality of TOs, if there is no TO overlapping with the TO, and a CG configuration corresponding to the TO is included in the first CG configuration set, determining the TO as the first TO.

In a possible design, the determining, according to the first signaling, a first TO from among a plurality of TOs within a first reporting period comprises:
for any TO among the plurality of TOs, if there is another TO overlapping with the TO, and CG configurations respectively corresponding to the plurality of overlapping TOs are all included in the first CG configuration set, determining the first TO from among the plurality of overlapping TOs according to the third field.

In a possible design, the determining the first TO from among the plurality of overlapping TOs according to the third field comprises:
if the third field indicates that PUSCHs are not simultaneously sent on the plurality of overlapping TOs, determining a TO indicated as to be used from among the plurality of overlapping TOs as the first TO; and
if the third field indicates that PUSCHs are simultaneously sent on the plurality of overlapping TOs, determining the first TO from among the plurality of overlapping TOs according to the fourth field.

In a possible design, the determining the first TO from among the plurality of overlapping TOs according to the fourth field comprises:
if the fourth field indicates that the first indication information is carried in each of the plurality of simultaneously sent PUSCHs, determining each of the plurality of overlapping TOs as the first TO; and
if the fourth field indicates that the first indication information is not carried in each of the plurality of simultaneously sent PUSCHs, determining a target TO among the plurality of overlapping TOs as the first TO.

In a possible design, the target TO is a TO corresponding to a predefined CG configuration among the plurality of overlapping TOs.

In a possible design, the predefined CG configuration is a first CG configuration in the first CG configuration set; or
the predefined CG configuration is a CG configuration with the smallest sequence number in the first CG configuration set.

In a possible design, the first indication information comprises bits of TOs corresponding to CG configurations in a second CG configuration set within the first reporting period, and the bits are used to indicate whether the terminal device uses a corresponding TO.

In a possible design, the bits are sorted in a chronological order of the TOs, and for a plurality of TOs that overlap in time, the bits are further sorted in an order of corresponding CG configurations in the second CG configuration set.

In a possible design, the bits are sorted in an order of the CG configurations in the second CG configuration set, and for TOs corresponding to each CG configuration, the bits are further sorted in a chronological order of the TOs.

In a possible design, the first signaling is RRC signaling.

In a possible design, the first indication information is UCI.

In a third aspect, an embodiment of the present application proposes an indication information processing apparatus. The apparatus comprises:
a receiving module, configured to receive first signaling sent by a network device;
a processing module, configured to determine, according to the first signaling, a first transmission occasion (TO) from among a plurality of TOs within a first reporting period, the plurality of TOs being indicated by at least two configured grant (CG) configurations; and
a sending module, configured to send first indication information on the first TO, the first indication information being used to indicate TO usage status within the first reporting period.

In a fourth aspect, an embodiment of the present application proposes an indication information processing apparatus. The apparatus comprises:
a sending module, configured to send first signaling to a terminal device;
a processing module, configured to determine, according to the first signaling, a first TO from among a plurality of TOs within a first reporting period, the plurality of TOs being indicated by at least two CG configurations; and
a receiving module, configured to receive first indication information on the first TO, the first indication information being used to indicate TO usage status within the first reporting period.

In a fifth aspect, an embodiment of the present application provides a terminal device, wherein the terminal device may also be referred to as a terminal, a user equipment (UE), a mobile station (MS), a mobile terminal (MT), or the like. The terminal device may be a mobile phone, a smart television, a wearable device, a tablet computer (Pad), a computer with a wireless transceiver function, a virtual reality (VR) terminal device, an augmented reality (AR) terminal device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or the like.

The terminal device comprises a processor and a memory, wherein the memory stores computer-executable instructions, and the processor executes the computer-executable instructions stored in the memory, so that the terminal device executes the method in the first aspect.

In a sixth aspect, an embodiment of the present application provides a network device, wherein the network device may be a base transceiver station (BTS for short) in a GSM system or a CDMA system, or may be a NodeB (NB for short) in a WCDMA system, or may be an evolved NodeB (eNB for short), an access point (AP), or a relay station in an LTE system, or may be a base station in a 5G system, or the like.

The network device comprises a processor and a memory, wherein the memory stores computer-executable instructions, and the processor executes the computer-executable instructions stored in the memory, so that the terminal device executes the method in the second aspect.

In a seventh aspect, an embodiment of the present application provides a computer-readable storage medium, wherein the computer-readable storage medium stores a computer program. When the computer program is executed by a processor, the methods in the first aspect and the second aspect are implemented.

In an eighth aspect, an embodiment of the present application provides a computer program product, wherein the computer program product comprises a computer program, and the computer program, when run, causes a computer to execute the methods in the first aspect and the second aspect.

In a ninth aspect, an embodiment of the present application provides a chip, wherein the chip comprises a processor, and the processor is configured to invoke a computer program in a memory, so as to execute the methods in the first aspect and the second aspect.

It should be understood that the second aspect to the fifth aspect of the present application correspond to the technical solutions of the first aspect of the present application, and the beneficial effects achieved by the aspects and the corresponding feasible implementations are similar, and will not be repeated here.

### BRIEF DESCRIPTION OF THE DRAWINGS

FIG. 1 is a schematic diagram of a communication scenario provided in an embodiment of the present application;
FIG. 2 is a schematic diagram of a frame period provided in an embodiment of the present application;
FIG. 3 is a schematic diagram of splitting a PUSCH provided in an embodiment of the present application;
FIG. 4 is a schematic diagram of PUSCH splitting for CG1 provided in an embodiment of the present application;
FIG. 5 is a schematic diagram of PUSCH splitting for CG2 provided in an embodiment of the present application;
FIG. 6 is a schematic diagram of UTO-UCI reporting provided in an embodiment of the present application;
FIG. 7 is a schematic diagram of a configuration for a UTO-UCI reporting period provided in an embodiment of the present application;
FIG. 8 is a first schematic diagram of multiple CG configurations provided in an embodiment of the present application;
FIG. 9 is a second schematic diagram of multiple CG configurations provided in an embodiment of the present application;
FIG. 10 is a flowchart of an indication information processing method provided in an embodiment of the present application;
FIG. 11 is a schematic diagram of an implementation of determining a first TO provided in an embodiment of the present application;
FIG. 12 is a first schematic diagram of an implementation of determining UTO-UCI provided in an embodiment of the present application;
FIG. 13 is a second schematic diagram of an implementation of determining UTO-UCI provided in an embodiment of the present application;
FIG. 14 is a first schematic structural diagram of an indication information processing apparatus provided in an embodiment of the present application;
FIG. 15 is a second schematic structural diagram of an indication information processing apparatus provided in an embodiment of the present application;
FIG. 16 is a schematic structural diagram of a terminal device provided in an embodiment of the present application; and
FIG. 17 is a schematic structural diagram of a network device provided in an embodiment of the present application.

### DETAILED DESCRIPTION OF THE EMBODIMENTS

For ease of understanding, concepts involved in the present application are explained and described first.

A terminal device may be a device that has a wireless transceiver function and that can cooperate with a network device to provide a communication service for a user. Specifically, the terminal device may be a user equipment (UE), an access terminal, a subscriber unit, a subscriber station, a mobile station, a mobile console, a remote station, a remote terminal, a mobile device, a user terminal, a terminal, a wireless communications device, a user agent, or a user apparatus. For example, the user equipment may be a cellular phone, a cordless phone, a session initiation protocol (SIP) phone, a wireless local loop (WLL) station, a personal digital assistant (PDA), a handheld device having wireless communication functions, a computing device, another processing device connected to a wireless modem, an in-vehicle device, a wearable device, a terminal device in future 5G networks or networks after 5G, or the like.

A network device may be a device configured to communicate with a terminal device. For example, the network device may be a base transceiver station (BTS) in a global system for mobile communication (GSM) or a code division multiple access (CDMA) communication system, or may be a NodeB (NB) in a wideband code division multiple access (WCDMA) system, or may be an evolved NodeB (eNB or eNodeB) in an LTE system. Alternatively, the network device may be a relay station, an access point, an in-vehicle device, a wearable device, a network-side device in future 5G networks or networks after 5G, a network device in future evolved public land mobile networks (PLMN), or the like.

The network device involved in the embodiments of the present application may also be referred to as a radio access network (RAN) device. The RAN device is connected to a terminal device, and is configured to receive data of the terminal device and send the data to a core network device. The RAN device corresponds to different devices in different communication systems. For example, the RAN device corresponds to a base transceiver station and a base transceiver station controller in a 2G system, corresponds to a base transceiver station and a radio network controller (RNC) in a 3G system, corresponds to an evolved NodeB (eNB) in a 4G system, and corresponds to an access network device (e.g., a gNB, a centralized unit (CU), or a distributed unit (DU)) in a 5G system, for example, those in new radio (NR) in the 5G system.

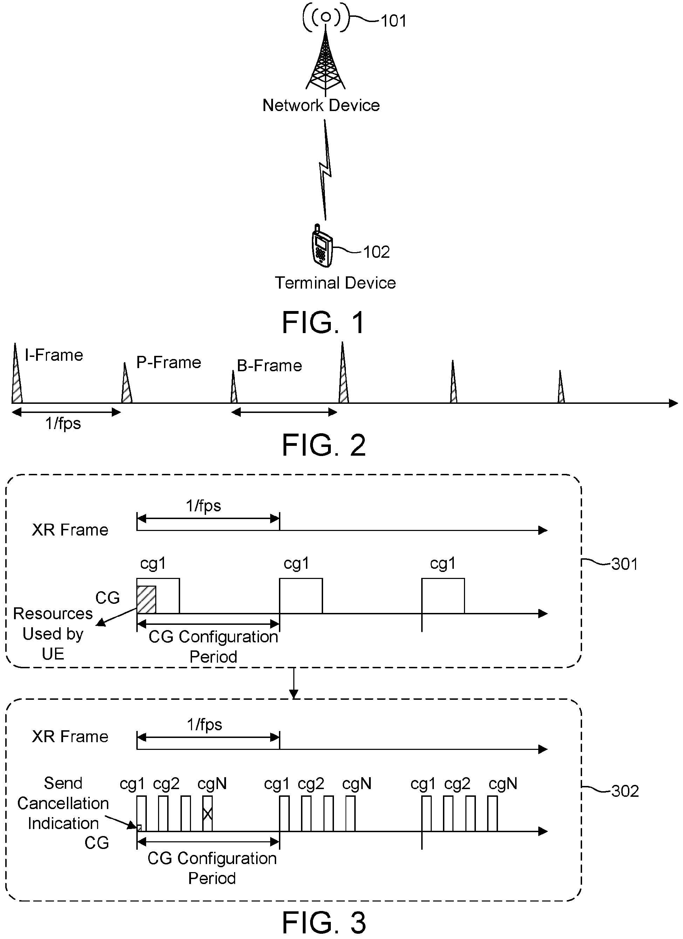

A scenario to which a communication method in the present application is applicable will be described below with reference to FIG. 1.

FIG. 1 is a schematic diagram of a communication scenario provided in an embodiment of the present application. Referring to FIG. 1, a network device 101 and a terminal device 102 are included, and wireless communication may be performed between the network device 101 and the terminal device 102, wherein the terminal device 102 may communicate with at least one core network via a radio access network (RAN).

The communication system may be a global system of mobile communications (GSM for short), a code division multiple access (CDMA for short) system, a wideband code division multiple access (WCDMA for short) system, a long term evolution (Long Term XR VR AREvolution, LTE for short) system, or a fifth-generation (5G for short) mobile communication system.

Correspondingly, the network device may be a base transceiver station (BTS for short) in the GSM system or the CDMA system, or may be a NodeB (NB for short) in the WCDMA system, or may be an evolved NodeB (eNB for short), an access point (AP), or a relay station in the LTE system, or may be a base station in the 5G system, or the like, which is not limited herein.

The 5G mobile communication system described in the present application includes a non-standalone (NSA) 5G mobile communication system and/or a standalone (SA) 5G mobile communication system. The technical solutions provided in the present application may further be applied to a future communication system, for example, a sixth generation mobile communication system. The communication system may also be a PLMN network, a device-to-device (D2D) network, a machine to machine (M2M) network, an IoT network, or another network.

It can be understood that, if the technical solutions in the embodiments of the present application are applied to other wireless communication networks, corresponding names may be replaced with the names of corresponding functions in the other wireless communications networks.

The network architecture and service scenarios described in the embodiments of the present application are intended to more clearly describe the technical solutions of the embodiments of the present application, and do not constitute a limitation on the technical solutions provided in the embodiments of the present application. Those of ordinary skill in the art will appreciate that, with the evolution of network architectures and the emergence of new service scenarios, the technical solutions provided in the embodiments of the present application are also applicable to a schematic diagram of a frame period provided in the embodiments of the present application in FIG. 2 for a similar technical problem.

Development of 5G technologies also promotes progress of extended reality (XR) services, such as virtual reality (VR) services, augmented reality (AR) services, and mixed reality (MR) services.

Using a VR service scenario as an example, a frame has periodicity in a virtual reality (VR) scenario, and a transmission period of the frame may be understood with reference to FIG. 2.

FIG. 2 is a schematic diagram of a frame period provided in an embodiment of the present application.

As shown in FIG. 2, in the VR scenario, uplink transmission of a video frame may be performed at a fixed period, wherein the transmitted video frame may be, for example, an I-frame (key frame), a P-frame (forward reference frame), or a B-frame (bidirectional reference frame).

Referring to FIG. 2, it can be determined that the frame transmission period is 1/fps, wherein fps is frames per second. For example, if fps is 30, the corresponding frame transmission period is 33.33 ms (milliseconds), for another example, if fps is 60, the corresponding frame transmission period is 16.67 ms, and for another example, if fps is 120, the corresponding frame transmission period is 8.33 ms.

Currently, dynamic scheduling or semi-persistent scheduling may be used for uplink transmission.

For dynamic scheduling, the network device needs to send downlink control information (DCI) to the terminal device to configure an uplink resource, and then the terminal device sends a physical uplink shared channel (PUSCH) on the corresponding uplink resource.

However, for an XR service that needs to periodically send uplink data, if dynamic scheduling is used, the network device needs to send DCI multiple times. In addition, the XR service has high requirements on delay, and multiple signaling interactions during the dynamic scheduling may also affect delay.

Semi-persistent scheduling is a scheduling method in which transmission resources are periodically preconfigured, and therefore, semi-persistent scheduling is most suitable for the periodic XR service in terms of power consumption and delay.

In uplink transmission, there are two types of scheduling schemes without dynamic grant, and their main difference lies in different activation modes:
Type 1 (configured grant type 1, CG1): In this scheme, all parameters are configured by radio resource control (RRC) signaling, and uplink transmission is activated. As long as RRC configuration is successful, a UE may send the PUSCH on the configured periodic uplink resource without DCI activation.

Type 2 (configured grant type 2, CG2): In this scheme, the network device first configures a data transmission period for the UE by means of RRC signaling, then activates or releases an uplink CG by using a physical downlink control channel (PDCCH) scrambled by a configured scheduling radio network temporary identifier (CS-RNTI), and specifies a radio resource used by the uplink CG. Then, in each period, the UE may send the PUSCH by using the CG resource.

The use of the CG allows the implementation of periodic sending without dynamic scheduling each time, which is more suitable for the characteristics of the XR service. However, in the XR service, especially in a scenario such as MR, video-type service data needs to be sent in the uplink transmission, with a large data volume and a large quantity of resources occupied. If CG resources within a period are reserved for each UE according to the maximum traffic volume of a single transmission, system capacity will be very limited. As an example, in an XR scenario, the system can support only about 10 UEs.

In order to improve system capacity, the CG may be enhanced in the following two aspects:
In a first aspect, one PUSCH in the CG period is split into a plurality of PUSCHs for transmission.

In a second aspect, the UE may dynamically indicate which PUSCHs in the CG period are not used.

The concept can be understood with reference to FIG. 3, for example, which is a schematic diagram of splitting a PUSCH provided in an embodiment of the present application.

In FIG. 3, 301 illustrates a case in which the CG resources within the period are reserved for the UE according to the maximum traffic volume of the single transmission, and it can be understood with reference to 301 that the same CG resources are reserved in each CG configuration period by taking the maximum traffic volume as a standard.

By using the first CG configuration period as an example, the network device reserves a large quantity of CG resources for the terminal device. However, assuming that the UE transmits uplink data only on the CG resources indicated by the gray portion, reserved CG resources outside the gray portion will be wasted.

Still further referring to 302 in FIG. 3, one PUSCH within the CG period may be split into a plurality of PUSCHs for transmission. For example, as can be understood by comparing 301 and 302, the number of CG resources reserved within the CG period is actually the same.

However, in 302, each CG configuration period includes a plurality of CG resources with a small resource size, and each CG resource is used to transmit one PUSCH.

In addition, assuming that the PUSCH sent on CG resource 1 in the first configuration period may carry a transmission cancellation indication, and the transmission cancellation indication is used to indicate that the current UE does not use the fourth CG resource, the network device may allocate CG resource 4 to another UE for use.

In other words, through splitting and advance indication, the network device may dynamically allocate, to other UEs for use, transmission resources of certain PUSCHs that are not used by a UE within a CG period, thereby improving system capacity.

Regarding the example in FIG. 3, it should also be noted that, in FIG. 3, the CG configuration period is consistent with the frame transmission period of the XR service, and during actual implementation, the CG configuration period may be inconsistent with the frame transmission period of the XR service, which is not limited in the present application.

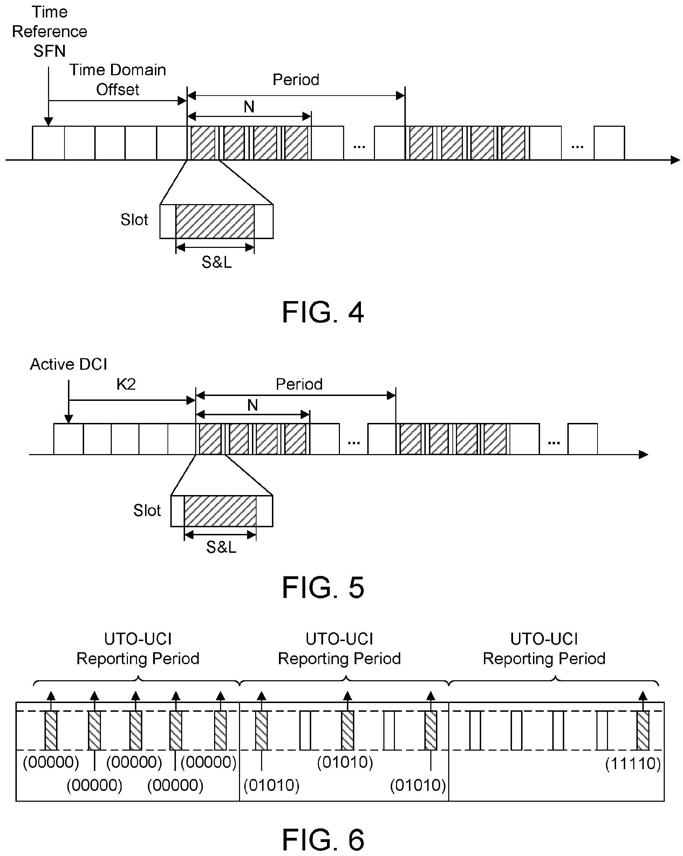

With reference to FIGS. 4 and 5, PUSCH splitting situations respectively corresponding to the two CG types described above will be separately described below, wherein FIG. 4 is a schematic diagram of PUSCH splitting for CG1 provided in an embodiment of the present application, and FIG. 5 is a schematic diagram of PUSCH splitting for CG2 provided in an embodiment of the present application.

In FIGS. 4 and 5, a white small square represents a slot, and a gray-filled portion in the white small square represents a CG resource.

Referring to FIG. 4, for CG1, a time reference SFN and a time domain offset are used to indicate a start position of CG resources, and each CG configuration period includes N CG resources, wherein the N CG resources are resources at specified positions within N available slots. As an example, the RRC may configure an S&L (start symbol & symbol length), and resources at specified positions within each available slot may be resources indicated by the S&L.

In addition, referring to FIG. 5, for CG2, active DCI and a slot offset (K2) are used to indicate a start position of CG resources, and each CG configuration period includes N CG resources, wherein the N CG resources are similar to those described in FIG. 4 above, and the difference is that S&L in CG2 may be indicated by the active DCI, and K2 is also indicated by the DCI.

PUSCH splitting situations respectively corresponding to the two CG types have been described above with reference to FIGS. 4 and 5, and it can further be determined with reference to the above that there is currently an enhancement in the second aspect, that is, the UE can dynamically indicate an unused PUSCH within a period.

The time domain position corresponding to the PUSCH may also be understood as a PUSCH transmission occasion (TO). For example, newly defined uplink control information (UCI) may be used to indicate an unused PUSCH within a period, wherein the newly defined UCI may be UTO-UCI, and UTO is an unused CG PUSCH transmission occasion. The UTO-UCI may be sent multiple times within one CG period, for example, in a plurality of PUSCHs within one period.

If a previously sent UTO-UCI indicates that a PUSCH TO is unused (not used or not sent), subsequently, the PUSCH TO cannot be modified to NOT unused (used or sent) by sending the UTO-UCI. For example, when 1 is used to indicate unused, and 0 is used to indicate NOT unused, if the previously sent UTO-UCI indicates that the sending status of a PUSCH TO is 1, the occasion cannot subsequently be changed to 0.

However, if the previously sent UTO-UCI indicates that a PUSCH TO is NOT unused (used or sent), subsequently, the PUSCH TO may be modified to unused (not used or not sent) by sending the UTO-UCI. That is, if the previously sent UTO-UCI indicates that the sending status of a PUSCH TO is 0, subsequently, the occasion may be modified to 1.

In short, for a PUSCH TO that the UE indicates as NOT unused, the UE may or may not actually send a PUSCH on the TO, and when the UE determines not to send the PUSCH, the UE may perform re-indication by sending the UTO-UCI in advance (that is, 0 is changed to 1). However, for the PUSCH TO that the UE indicates as unused, as long as the UE sends the indication, the indication cannot be revoked, that is, re-indication cannot be carried out by sending updated UTO-UCI (that is, 1 cannot be changed to 0).

For example, the indication of the UTO-UCI may be understood with reference to FIG. 6, which is a schematic diagram of reporting of the UTO-UCI provided in an embodiment of the present application.

As shown in FIG. 6, a UTO-UCI reporting period may be configured, wherein the UTO-UCI reporting period may be consistent with or inconsistent with the CG configuration period described above, which is not limited in the present application.

For example, it is assumed that in the current example, each UTO-UCI reporting period includes five PUSCHs, and it is assumed that the UE carries UTO-UCI in each sent PUSCH.

Referring to FIG. 6, for the first UTO-UCI reporting period, if the five PUSCHs in the UTO-UCI reporting period are all used by the UE, the UTO-UCI may be configured as 00000 (0 indicates to be used, and 1 indicates as unused).

In addition, for the second UTO-UCI reporting period, if the first, third, and fifth PUSCHs in the UTO-UCI reporting period are to be used by the UE, and the second and fourth PUSCHs in the CG period are unused by the UE, the UTO-UCI may be configured as 01010. Since the second PUSCH and the fourth PUSCH in the CG period are unused by the UE, the UE will naturally not send the two PUSCHs, and accordingly, the UE will not transmit the UTO-UCI on the two PUSCH TOs.

For the case in the second PUSCH reporting period, if the UE has transmitted the UTO-UCI on the first PUSCH to indicate that the second PUSCH and the fourth PUSCH in the CG period are unused, subsequently, the UE cannot indicate, by updating the UTO-UCI, that the second PUSCH and the fourth PUSCH in the CG period are to be used again.

However, although the UE has transmitted the UTO-UCI on the first PUSCH to indicate that the first, third, and fifth PUSCHs are to be used, if the UE subsequently determines that the fifth PUSCH is unused, the UE may send updated UTO-UCI on the third PUSCH to indicate that the fifth PUSCH is unused.

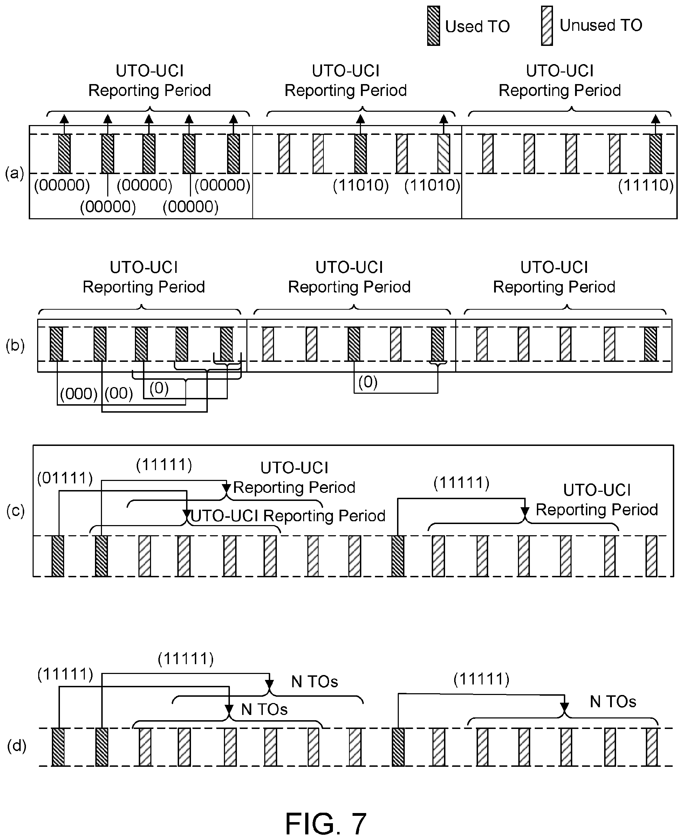

In addition, there are also a plurality of possible implementations for the configuration of the UTO-UCI reporting period, and the plurality of possible implementations of the UTO-UCI reporting period will be separately described below with reference to FIG. 7. FIG. 7 is a schematic diagram of a configuration for a UTO-UCI reporting period provided in an embodiment of the present application.

Referring to (a) in FIG. 7, in a possible implementation, the UTO-UCI reporting period may be consistent with the CG period, and in one UTO-UCI reporting period, the UTO-UCI sent by the TOs are all the same, including the usage status of all the TOs within the current UTO-UCI reporting period.

For example, in the first UTO-UCI reporting period of 7(a), five TOs are included, and all of the five TOs are used TOs; then, the five TOs all send UTO-UCI, and the UTO-UCI sent on each TO indicates 00000.

Referring to (b) in FIG. 7, in another possible implementation, the UTO-UCI reporting period may be consistent with the CG period, but within one UTO-UCI reporting period, the number of bits of the UTO-UCI sent by each TO may vary, and the UTO-UCI includes the usage status of the starting TO indicated by UTO_offset to the last TO in the current UTO-UCI reporting period.

Taking UTO_offset = 1 as an example, for example, the first UTO-UCI reporting period of 7 (b) includes five TOs, and all of the five TOs are used TOs. For the first TO, the UTO-UCI sent by the first TO includes the usage status of the starting TO (i.e., the third TO) indicated by UTO_offset = 1 to the last TO (i.e., the fifth TO) in the current UTO-UCI reporting period, and the UTO-UCI sent on the first TO indicates 000. The remaining TOs are similar, and details are not described herein again.

Referring to (c) in FIG. 7, in another possible implementation, the length of the UTO-UCI reporting period is fixed, and for example, is the same as the length of the CG period, but the position of the UTO-UCI reporting period is determined in a sliding window mode. For example, one UTO-UCI reporting period may be determined for each used TO. Specifically, a TO that is offset from the used TO by UTO_offset is used as the starting TO, and then the UTO-UCI reporting period is determined with a fixed length starting from the starting TO.

Taking UTO_offset = 0 as an example, for example, the first TO in 7(c) is a used TO, a TO (i.e., the second TO) with an offset of 0 from the first TO is used as the starting TO, and then the UTO-UCI reporting period is determined with a fixed length starting from the starting TO; the UTO-UCI reporting period determined for the first TO includes the second to sixth TOs in FIG. 7(c), and then the UTO-UCI sent on the first TO indicates TO usage status within the UTO-UCI reporting period. Referring to FIG. 7 (c), the UTO-UCI sent on the first TO indicates 01111.

Described above are all the implementations in which the length of the UTO-UCI reporting period is fixed, and when the length of the UTO-UCI reporting period is fixed, the number of TOs within the UTO-UCI reporting period is not fixed. Therefore, there is another implementation in which the period length of the UTO may not be fixed.

Referring to (d) in FIG. 7, in another possible implementation, the length of the UTO-UCI reporting period is not fixed. For example, it may be set that each UTO-UCI reporting period includes N TOs, wherein N is an integer greater than or equal to 1, so that the number of TOs within the UTO-UCI reporting period is fixed. In addition, the position of the UTO-UCI reporting period is determined in a sliding window mode, and the implementation of the sliding window is similar to that of FIG. 7(c).

Based on the contents described above, it can be determined that, for the CG enhancement in the two aspects, the PUSCH may be split within one CG period, and then the UTO-UCI is reported within the CG period according to a certain strategy. However, currently, the network device may further send multiple CG configurations to the terminal device, and for the multiple CG configurations, assuming that the UTO-UCI is to be reported after splitting the PUSCH, there is no effective technical solution currently with respect to whether the UE is supported in reporting the UTO-UCI based on the multiple CG configurations, and how to specifically report the UTO-UCI based on the multiple CG configurations if the UE is supported.

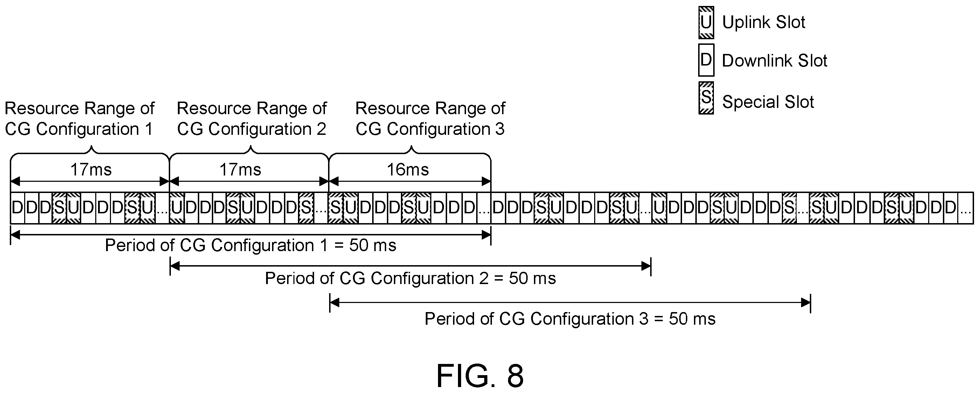

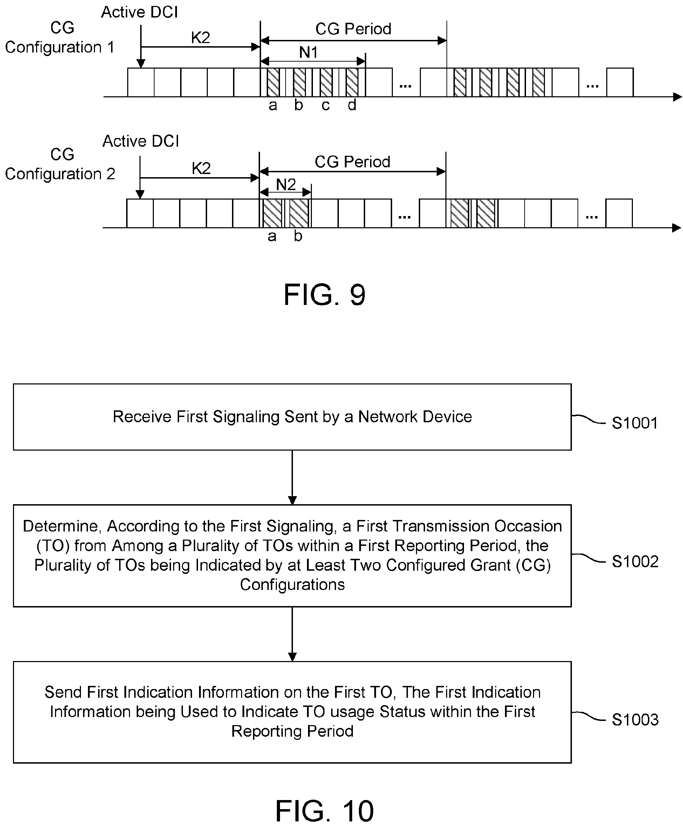

Two possible cases of the multiple CG configurations will be described below with reference to FIGS. 8 and 9, respectively, wherein FIG. 8 is a first schematic diagram of the multiple CG configurations provided in an embodiment of the present application, and FIG. 9 is a second schematic diagram of the multiple CG configurations provided in an embodiment of the present application.

As shown in FIG. 8, it is assumed that there are currently three CG configurations, which are CG configuration 1, CG configuration 2, and CG configuration 3, respectively; and it is assumed that the periods of the three CG configurations are all 50 ms.

In addition, it is assumed that the arrangement of the slots is repeated at a period of 50 ms, and a plurality of slots included in each 50 ms specifically include a plurality of uplink slots (U), a plurality of downlink slots (D), and a plurality of special slots (S). Referring to FIG. 8, it can be determined that, for a slot structure of 50 ms, CG configuration 1 includes a PUSCH TO within the first 17 ms, CG configuration 2 includes a PUSCH TO within the middle 17 ms, and CG configuration 3 includes a PUSCH TO within the last 16 ms, with the sequence repeated periodically. Referring to FIG. 8, it can be determined that there is no overlap between the TOs indicated by the three CG configurations.

For example, different CG configurations (Config) correspond to different frame types (I-frame, P-frame, and B-frame), and the periods are aligned, so that multiple CG configurations may be implemented without TO overlapping, as described with reference to FIG. 8.

Alternatively, referring to FIG. 9, it is assumed that there are currently CG configuration 1 and CG configuration 2, wherein CG configuration 1 and CG configuration 2 each have corresponding active DCI and slot offsets K2, which are used to indicate resource start positions corresponding to the two CG configurations.

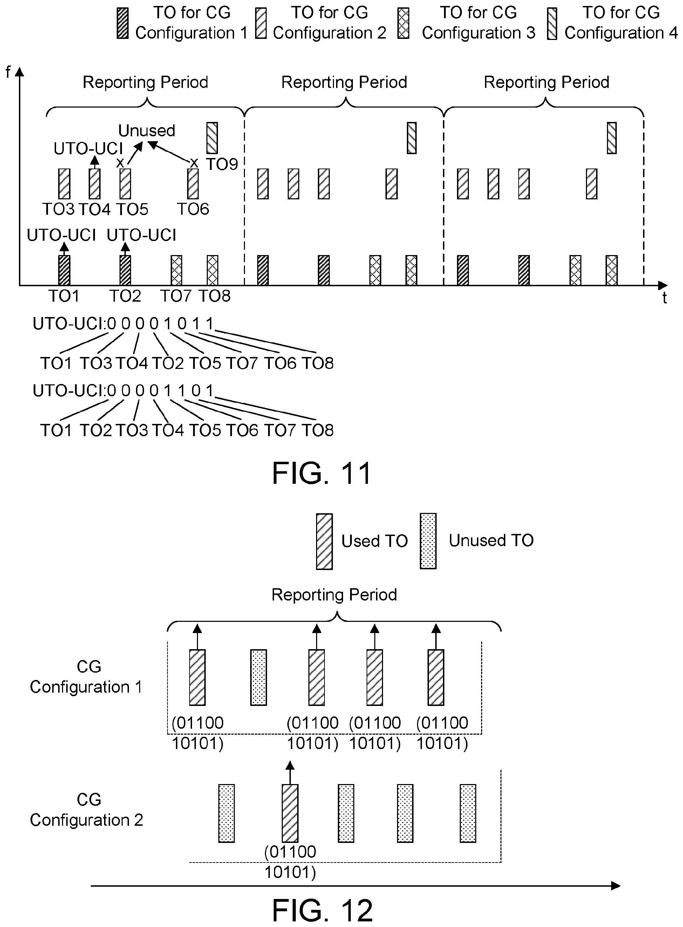

For CG configuration 1, N1 CG resources are included within each CG configuration period, and for CG configuration 2, N2 CG resources are included within each CG configuration period. In the example of FIG. 12, assuming that there are CG resources on slot a, slot b, slot c, and slot d within the first CG period of CG configuration 1, and there are CG resources on slot a and slot b within the first CG period of CG configuration 2, it can be determined that TOs respectively corresponding to CG configuration 1 and CG configuration 2 overlap.

For example, different CG configurations correspond to different uplink streams, such as a video stream and a pose stream, so that multiple CG configurations may be implemented with TO overlapping, as described with reference to FIG. 9.

Based on the contents described above, a specific implementation of how to report UTO-UCI for a scenario involving multiple CG configurations in an indication information processing method provided by the present application will be described with reference to specific embodiments.

First of all, description will be made with reference to FIG. 10, which is a flowchart of an indication information processing method provided in an embodiment of the present application.

As shown in FIG. 10, the method includes:
S1001: Receive first signaling sent by a network device.

In this embodiment, the network device may send the first signaling to a terminal device, and the first signaling may include related indication information for reporting UTO-UCI for multiple CG configurations, so that the terminal device may receive the first signaling sent by the network device, and then determine, according to the first signaling, how to send the UTO-UCI. The first signaling may be, for example, RRC signaling.

S1002: Determine, according to the first signaling, a first transmission occasion (TO) from among a plurality of TOs within a first reporting period, the plurality of TOs being indicated by at least two configured grant (CG) configurations.

In this embodiment, the terminal device reports TO usage status using one reporting period as a unit, that is, the terminal device sends TO usage status within the reporting period to the network device, so that the network device determines whether the terminal device needs to use the TOs within the reporting period, wherein the reporting period may be, for example, the UTO-UCI reporting period described above. For a specific configuration of reporting periods, reference may be made to any one described in the embodiment in FIG. 7 above, and this embodiment is not limited thereto.

Since processing modes of the reporting periods are similar, any first reporting period is used as an example for description herein. Assuming that the first reporting period includes a plurality of TOs, in this embodiment, the plurality of TOs within the first reporting period are indicated by at least two CG configurations.

Here, an example may be used for understanding. For example, the first reporting period includes four TOs, which are TO1, TO2, TO3, and TO4, respectively; and it is assumed that the network device sends, to the terminal device, two CG configurations, which are CG configuration 1 and CG configuration 2, respectively. For example, TO1 and TO3 in the first reporting period are TOs indicated by CG configuration 1, and TO2 and TO4 in the first reporting period are TOs indicated by CG configuration 2.

That is, in the scenario of this embodiment, the network device sends multiple CG configurations to the terminal device, and correspondingly, the first reporting period of the terminal device includes a plurality of TOs indicated by the multiple CG configurations. When reporting TO usage status, a problem that needs to be resolved is which specific TO or TOs among the plurality of TOs included in the first reporting period should be used for reporting.

Therefore, in this embodiment, the first TO may be determined from among the plurality of TOs within the first reporting period according to the first signaling, wherein the first TO is a TO used to report TO usage status, and there may be a plurality of first TOs.

S1003: Send first indication information on the first TO, the first indication information being used to indicate TO usage status within the first reporting period.

After the first TO is determined, the first indication information may be sent on the first TO, and the first indication information in this embodiment is used to indicate TO usage status within the first reporting period.

The first indication information may be, for example, the UTO-UCI described above, or the first indication information may be any type of UCI, or the first indication information may be newly defined indication information, as long as the first indication information can implement a corresponding indication function. In addition, the first indication information being sent together with the PUSCH within the first TO in this embodiment may also be understood as the first indication information being carried in the PUSCH.

The indication information processing method provided in an embodiment of the present application includes: receiving first signaling sent by a network device; determining, according to the first signaling, a first transmission occasion (TO) from among a plurality of TOs within a first reporting period, the plurality of TOs being indicated by at least two configured grant (CG) configurations; and sending first indication information on the first TO, the first indication information being used to indicate TO usage status within the first reporting period. By means of the first signaling, the first TO is determined from among the plurality of TOs within the first reporting period, so that specific TOs for information reporting among the plurality of TOs indicated by the plurality of CG configurations can be clearly specified; and then the first indication information is sent on the determined first TO, so that TO usage status can be effectively reported in a scenario involving multiple CG configurations.

Based on the contents described above, the problem of reporting the UTO-UCI under multiple CG configurations is further subdivided below. In practice, when reporting the UTO-UCI for the multiple CG configurations, the following three main problems need to be solved:
problem 1: which CG configurations have TOs that can be used to send the UTO-UCI;
problem 2: which are the specific CG configurations whose TO usage status is indicated by the sent UTO-UCI; and
problem 3: how to encode the usage status of a plurality of TOs within the period for the sent UTO-UCI.

For problems 1 and 2, configuration may be performed by means of related fields in the first signaling, and an implementation of content included in the first signaling will be further described.

In a possible implementation, the first indication information may include a first field, and the first field is used to indicate a first CG configuration set permitted for transmission of the first indication information.

It can be understood that the network device sends multiple CG configurations to the terminal device, and the first field indicates which CG configurations among the multiple CG configurations can be used to send the first indication information.

It is assumed that the network device currently sends, to the terminal device, four CG configurations, which are CG configuration 1, CG configuration 2, CG configuration 3, and CG configuration 4, respectively. In addition, assuming that the first field is reportCgConfigIndex, if reportCgConfigIndex is configured as {cg1, cg2}, that is, the first CG configuration set includes CG configuration 1 and CG configuration 2, only the TOs of CG configuration 1 and CG configuration 2 may be used to send the first indication information.

As an example, a CG with fewer resources is unsuitable for sending the first indication information, and therefore, the first field may be used to indicate which specific CG configurations may be used to send the first indication information. This correspondingly solves problem 1 described above. Therefore, in this embodiment, by means of the first field, it is possible to effectively indicate which CG configurations have TOs that may be used to send the first indication information.

In another possible implementation, the first indication information further includes a second field, the second field is used to indicate a second CG configuration set, and the first indication information is used to indicate TO usage status of each CG configuration in the second CG configuration set within the reporting period.

It can be understood that, the network device sends multiple CG configurations to the terminal device, and the second field indicates, among the multiple CG configurations, the specific CG configurations whose TO usage statuses need to be reported by the UE.

It is assumed that the network device currently sends, to the terminal device, four CG configurations, which are CG configuration 1, CG configuration 2, CG configuration 3, and CG configuration 4, respectively. In addition, assuming that the second field is targetCgConfigIndex, if targetCgConfigIndex is configured as {cg1, cg2, cg3}, that is, the second CG configuration set includes CG configuration 1, CG configuration 2, and CG configuration 3, the UE will report the usage statuses of TOs of CG configuration 1, CG configuration 2, and CG configuration 3.

Therefore, the second field may be used to indicate the specific CG configurations whose TO usage statuses are to be reported by the UE, which correspondingly solves problem 2 described above. Therefore, in this embodiment, the second field may be used to effectively indicate the specific CG configurations whose TO usage status is indicated by the first indication information.

In addition, when there are a multiple CG configurations, TOs indicated by different CG configurations may overlap (which may also be referred to as intersecting), and how to process the overlapping TOs also needs to be indicated correspondingly.

Therefore, the first signaling may further include a third field, and the third field is used to indicate whether PUSCHs are simultaneously sent on a plurality of overlapping TOs.

For example, the third field is simultaneousPusch, which may be an enumerated value ENUMERATED {true}. That is, when the third field is configured to be true, it indicates that the PUSCHs may be simultaneously sent on the plurality of overlapping TOs. For example, if the PUSCHs cannot be simultaneously sent on the plurality of overlapping TOs by default, when the third field is not configured, it may indicate that the PUSCHs cannot be simultaneously sent. Alternatively, it is also possible that when the third field is configured to be false, it indicates that the PUSCHs cannot be sent simultaneously.

Therefore, in this embodiment, by means of the third field, it is possible to effectively indicate the sending mode of PUSCH when TOs overlap in a scenario involving multiple CG configurations.

For the overlapping TOs, if the third field indicates that the PUSCHs can be simultaneously sent on the overlapping TOs, whether all of the plurality of simultaneously sent PUSCHs need to carry the UTO-UCI also needs to be indicated correspondingly.

Therefore, the first signaling may further include a fourth field, and the fourth field is used to indicate whether the first indication information is carried in each of the plurality of simultaneously sent PUSCHs when the PUSCHs are simultaneously sent on the plurality of overlapping TOs.

For example, the fourth field is a simultaneousReport, which may be an enumerated value ENUMERATED {true}. That is, when the fourth field is configured to be true, it indicates that the first indication information is carried in each of the plurality of simultaneously sent PUSCHs. For example, if the first indication information cannot be carried in each of the plurality of simultaneously sent PUSCHs, when the fourth field is not configured, it may indicate that the first indication information cannot be carried in each of the plurality of simultaneously sent PUSCHs. Alternatively, it is also possible that when the fourth field is configured to be false, it indicates that the first indication information cannot be carried in each of the plurality of simultaneously sent PUSCHs.

Therefore, in this embodiment, by means of the fourth field, it is possible to effectively indicate the sending mode of the first indication information when the PUSCHs are simultaneously sent on the plurality of overlapping TOs in a scenario involving multiple CG configurations.

Based on the fields in the first signaling described above, multiple cases of determining the first TO will be separately described below by a specific example with reference to FIG. 11.

FIG. 11 is a schematic diagram of an implementation of determining the first TO provided in an embodiment of the present application.

As shown in FIG. 11, it is assumed that the network device sends, to the terminal device, four CG configurations, which are CG configuration 1, CG configuration 2, CG configuration 3, and CG configuration 4, respectively.

In addition, in FIG. 11, the horizontal axis t represents the time domain, and the vertical axis f represents the frequency domain; it can be determined with reference to FIG. 11 that each CG configuration indicates a corresponding TO at a different time-frequency position.

Meanwhile, the UE may determine the reporting period in a certain mode. For a specific determination mode, reference may be made to the description of the above embodiment. Then, the usage status of TOs within the reporting period is reported. In the example of FIG. 11, it is assumed that each reporting period includes nine TOs, and taking the first reporting period in FIG. 11 as an example, the nine TOs consist of two TOs (TO1 and TO2) indicated by CG configuration 1, four TOs (TO3, TO4, TO5, and TO6) indicated by CG configuration 2, two TOs (TO7 and TO8) indicated by CG configuration 3, and one TO (TO9) indicated by CG configuration 4, respectively.

Then, the UE needs to determine, from among the nine TOs included in the reporting period, specific TOs on which the first indication information needs to be sent, namely, determining which specific TOs are the first TOs.

Any reporting period in FIG. 11 may be understood as the first reporting period described in the foregoing embodiment, and an implementation of determining the first TO within the first reporting period will be described below by using the first occurrence of the first reporting period as an example.

For example, the UE performs determination for each TO within the first reporting period, and therefore, any one of the plurality of TOs within the first reporting period will be used as an example below to describe an implementation of determining whether the TO is the first TO.

In case 1, for any TO among the plurality of TOs, if there is no TO overlapping with the TO, and a CG configuration corresponding to the TO is included in the first CG configuration set, the TO is determined as the first TO.

Referring to FIG. 11, for example, for TO4, there is currently no other TO that overlaps with TO4, and the CG configuration corresponding to TO4 is CG configuration 2. It is assumed that the first CG configuration set indicated by the first field is {cg1, cg2}, that is, the CG configuration corresponding to TO4 is included in the first CG configuration set. Therefore, it can be confirmed that TO4 is the first TO.

In addition, for another opposite case, referring to FIG. 11, for example, for TO7, there is currently no other TO that overlaps with TO7, but the CG configuration corresponding to TO7 is CG configuration 3. It is assumed that the first CG configuration set indicated by the first field is {cg1, cg2}, that is, the CG configuration corresponding to the TO7 is not included in the first CG configuration set. Therefore, it can be confirmed that TO7 is not the first TO, that is, TO7 cannot be used to send the first indication information.

Therefore, it can be confirmed that, when the TOs do not overlap, whether one TO can be used to send the first indication information depends on the indication of the first field.

In case 2, for any one of the plurality of TOs, if there is another TO that overlaps with the TO, and CG configurations respectively corresponding to the plurality of overlapping TOs are all included in the first CG configuration set, and if the third field indicates that PUSCHs are not simultaneously sent on the plurality of overlapping TOs, a TO indicated as to be used among the plurality of overlapping TOs is determined as the first TO.

Referring to FIG. 11, for example, for TO2, there is currently another TO (i.e., TO5) that overlaps the TO2, and the CG configuration corresponding to the TO2 is CG configuration 1, the CG configuration corresponding to TO5 is CG configuration 2, and the two CG configurations are both included in the first CG configuration set. First, it indicates that both TO2 and TO5 are qualified to send the first indication information.

However, in the case that the TOs overlap, further reference needs to be made to the indication of the third field, and if the third field indicates that PUSCHs are not simultaneously sent on the plurality of overlapping TOs, that is, TO2 and TO5 cannot simultaneously send the PUSCHs, it indicates that only one of the two overlapping TOs can actually send the first indication information.

In addition, when the PUSCHs cannot be simultaneously sent on the overlapping TOs, it means that there is a TO unused by the UE among the plurality of overlapping TOs. For example, it has been indicated in the previously sent UTO-UCI that a certain TO among the plurality of overlapping TOs is used and other TOs are unused. Then, a TO indicated as used by the previous UTO-UCI among the plurality of overlapping TOs may be determined as the first TO.

Referring to FIG. 11, in the current example, assuming that the UE has indicated by means of the previously sent UTO-UCI that TO5 is unused and TO2 is used, TO2 may be determined as the first TO, that is, TO2 is used to send the first indication information.

In case 3, for any one of the plurality TOs, if there is another TO that overlaps with the TO, and CG configurations respectively corresponding to the plurality of overlapping TOs are all included in the first CG configuration set, and if the third field indicates that PUSCHs are simultaneously sent on the plurality of overlapping TOs, the first TO is determined from among the plurality of overlapping TOs according to the fourth field.

Case 3 is similar to case 2 described above, and the difference is that the indication of the third field is different. Another example will be used for description here. Referring to FIG. 11, for example, for TO1, there is currently another TO (i.e., TO3) that overlaps the TO1, and the CG configuration corresponding to TO1 is CG configuration 1, the CG configuration corresponding to TO3 is CG configuration 2, and the two CG configurations are both included in the first CG configuration set. First, it indicates that both TO1 and TO3 are qualified to send the first indication information.

However, in the case that the TOs overlap, further reference needs to be made to the indication of the third field, and if the third field indicates that PUSCHs are simultaneously sent on the plurality of overlapping TOs, that is, TO1 and TO3 can simultaneously send the PUSCHs, it indicates that the two overlapping TOs both meet the conditions for sending the first indication information.

In this case, further determination needs to be performed according to the fourth field.

In an implementation, if the fourth field indicates that the first indication information is carried in each of the plurality of simultaneously sent PUSCHs, all the plurality of overlapping TOs are determined as the first TOs.

For example, in the current example, overlapping TO1 and TO3 may simultaneously send PUSCHs, and the fourth field indicates that the first indication information is carried in each of the plurality of simultaneously sent PUSCHs, that is, the PUSCH sent on the TO1 carries the first indication information, and the PUSCH sent on the TO3 also carries the same first indication information. Therefore, both TO1 and TO3 are determined as the first TOs.

In another implementation, if the fourth field indicates that the first indication information is not carried in each of the plurality of simultaneously sent PUSCHs, a target TO among the plurality of overlapping TOs is determined as the first TO.

For example, in the current example, overlapping TO1 and TO3 may simultaneously send PUSCHs, but the fourth field indicates that the first indication information cannot be carried in each of the plurality of simultaneously sent PUSCHs. Then, it is necessary to determine which specific TO sends the PUSCH carrying the first indication information, that is, one first TO still needs to be selected from the overlapping TO1 and TO3.

For example, a target TO among the plurality of overlapping TOs may be determined as the first TO, wherein the target TO is a TO corresponding to a predefined CG configuration among the plurality of overlapping TOs.

The predefined CG configuration may be the first CG configuration in the first CG configuration set. Assuming that the first CG configuration set is {cg1, cg2}, the predefined CG configuration (the first CG configuration) is CG configuration 1. In the current example, among overlapping TO1 and TO3, the TO corresponding to CG configuration 1 is TO1, that is, TO1 is the target TO; therefore, TO1 may be determined as the first TO for sending the first indication information.

Alternatively, the predefined CG configuration may also be the CG configuration with the smallest sequence number in the first CG configuration set. Assuming that the first CG configuration set is {cg2, cg1}, the predefined CG configuration (with the smallest sequence number) is CG configuration 1. In the current example, among overlapping TO1 and TO3, the TO corresponding to CG configuration 1 is TO1, that is, TO1 is the target TO; therefore, TO1 may be determined as the first TO for sending the first indication information.

Various possible cases of determining whether one TO is the first TO have been described above with reference to FIG. 11, in which the determination is performed sequentially for the plurality of TOs within the first reporting period, thereby determining at least one first TO. In addition, it should also be noted that, the first TO in this embodiment is used to send the first indication information, and a prerequisite is that the first TO is a TO to be used by the terminal device, i.e., a used TO.

It should also be noted that, for the first TO within the first reporting period, if there is a TO that overlaps with the first TO, the first TO and the TO that overlaps with the first TO are collectively referred to as a plurality of initially overlapping TOs here; if only one TO among the plurality of initially overlapping TOs includes PUSCH transmission of the UTO-UCI, since there is no UTO-UCI indicating TO usage status within the current reporting period, the network device does not determine which specific TO is the used TO among the plurality of initially overlapping TOs. Therefore, the network device may perform blind detection on the plurality of initially overlapping TOs, thereby ensuring that the UTO-UCI is effectively received.

Therefore, in this embodiment, for various possible TO distribution cases caused by the presence of multiple CG configurations, by means of each field in the first signaling, it is possible to correctly and effectively determine the first TO that is used to send the first indication information.

For the reporting of the indication information of the multiple CG configurations listed above, there is still problem 3 to be solved, that is, how to encode the usage status of the plurality of TOs within the period for the sent UTO-UCI.

It should first be noted that the first indication information is used to report the usage status of TOs configured for CG configurations included in the second CG set within the first reporting period; each TO that meets the condition here and needs to report the usage status corresponds to one bit; and when a bit corresponding to the TO is 1, it indicates that the TO is an unused TO, and when a bit corresponding to the TO is 0, it indicates that the TO is a used TO.

Therefore, the first indication information includes bits of TOs corresponding to CG configurations included in the second CG configuration set within the first reporting period, and the bits are used to indicate whether the terminal device uses a corresponding TO.

In the foregoing example, it is assumed that the second CG configuration set is {cg1, cg2, cg3}, that is, the UE reports only the usage status of the TO indicated by CG configuration 1, the TO indicated by CG configuration 2, and the TO indicated by CG configuration 2 within the first reporting period.

Then, referring to FIG. 11, in practice, the first reporting period further includes TO9 indicated by CG configuration 4, but because CG configuration 4 is not included in the second CG configuration set, the UE does not report the usage status of TO9.

In addition, it should also be noted that the second CG configuration set includes CG configurations for which the UE needs to report the TO usage status. However, since there are multiple possible implementations for the reporting period, it cannot be ensured that each reporting period necessarily includes the TO of each CG configuration in the second CG configuration set. Therefore, when reporting, the UE only reports TO usage status of the CG configurations included in the second CG configuration set, included within the first reporting period.

As an example, assuming that the second CG configuration set is {cg1, cg2, cg3}, but currently, only TOs of CG configuration 1 and TOs of CG configuration 2 exist in a reporting period, the corresponding first reporting information includes only TO usage status of CG configuration 1 and the TOs of CG configuration 2. In addition, the network device can know the specific configuration of TOs within each reporting period. Therefore, for the current example, the network device side can determine that the reporting period does not include TOs of CG configuration 3, and thus, when decoding is performed, TO usage status within the reporting period can be correctly obtained as long as processing is performed in the coding and decoding mode agreed with the UE.

The foregoing description merely describes that corresponding bits exist for all corresponding TOs within the first reporting period, thereby forming the first indication information, but how to specifically sort the bits corresponding to the plurality of TOs needs to be further determined, so that final coding can be obtained.

In a possible implementation, the bits are sorted in a chronological order of the TOs, and for a plurality of TOs that overlap in time, the bits are further sorted in an order of corresponding CG configurations in the second CG configuration set.

For example, it may be understood with reference to FIG. 11 that, also using the first reporting period as an example, assuming that the second CG configuration set is {cg1, cg2, cg3}, the UE only needs to report the usage status of TOs corresponding to CG configuration 1, CG configuration 2, and CG configuration 3, that is, the UE only needs to report the usage status of TO1 to TO8. Assuming that TO5, TO6, and TO8 are unused TOs, bits corresponding to the three TOs are 1, and bits corresponding to the remaining five TOs are 0.

According to the current bit sorting mode, TO1 and TO3 are the earliest and overlapping in time, and the CG configurations corresponding to the two TOs are sorted in the order of the CG configurations in the second CG configuration set, wherein TO1 corresponds to CG configuration 1, TO1 corresponds to CG configuration 2, and in the second CG configuration set, CG configuration 1 precedes CG configuration 2. Then, with reference to the first type of UTO-UCI schematically shown in FIG. 11, the bit (0) of TO1 is at the first bit, and the bit (1) of TO3 is at the second bit.

In addition, according to the chronological order of the TOs, the third bit is the bit (0) of TO4.

In addition, according to the chronological order of the TOs, the next ones are overlapping TO2 and TO5, and according to the same implementation as above, it can be determined that CG configuration 1 corresponding to TO2 is sorted earlier. Therefore, the fourth bit is the bit (0) of TO2, and the fifth bit is the bit (1) of TO5.

Then, according to the chronological order of the TOs, the sixth bit is the bit (0) of TO7, the seventh bit is the bit (1) of TO6, and the eighth bit is the bit (1) of TO8.

According to the foregoing sorting mode, the UTO-UCI may be obtained as 00001011 shown in FIG. 11.

In another possible implementation, the CG configurations may be sorted in an order of the CG configurations in the second CG configuration set, and TOs corresponding to each CG configuration are sorted in a chronological order of the TOs.

Also using FIG. 11 as an example, assuming that the second CG configuration set is {cg1, cg2, cg3}, it may be determined, according to an order of CG configurations within the first reporting period in the second CG configuration set, that bits of TOs (TO1 and TO2) of CG configuration 1 are arranged first, followed by bits of TOs (TO3, TO4, TO5, and TO6) of CG configuration 2 and then bits of TOs (TO7 and TO8) of CG configuration 3.

Then, the TOs corresponding to each CG configuration are sorted in the chronological order of the TOs.

For example, for the TOs (TO1 and TO2) of CG configuration 1, according to the chronological order of the TOs, the bits of the TO1 are arranged first, followed by the bits of the TO2, thereby obtaining the first two bits 00 in the UTO-UCI.

In addition, for the TOs (TO3, TO4, TO5, and TO6) of CG configuration 2, the bits of TO3, TO4, TO5, and TO6 are sequentially arranged in the chronological order of the TOs, thereby obtaining the third to sixth bits 0011 in the UTO-UCI.

In addition, for the TOs (TO7 and TO8) of CG configuration 3, according to the chronological order of the TOs, the bits of TO7 are arranged first, followed by the bits of TO8, thereby obtaining the last two bits 01 in the UTO-UCI.

According to the foregoing sorting mode, the UTO-UCI may be obtained as 00001101 shown in FIG. 11.

In the example of FIG. 11, assuming that TO1, TO4, and TO2 are determined as the first TOs, the UTO-UCI is sent on all the three TOs, and the contents of the UTO-UCI sent on the three TOs may be the same, all of which contain the encoded contents described above.

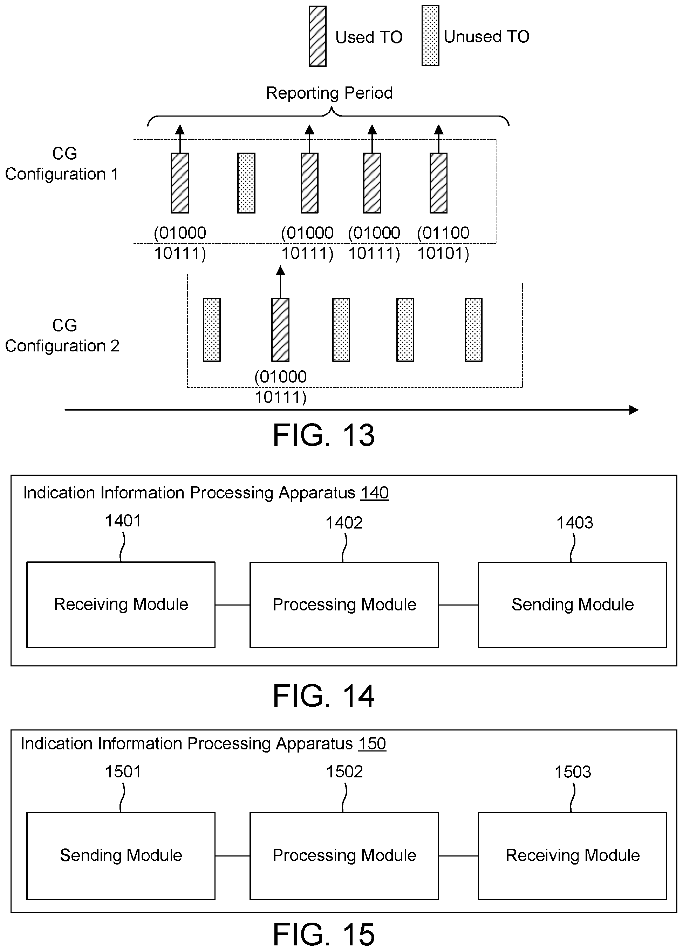

Since the example in FIG. 11 is relatively complex, the following further describes the foregoing two UTO-UCI encoding modes for multiple CG configurations by using a more clear example with reference to FIGS. 12 and 13, wherein FIG. 12 is a first schematic diagram of implementation of determining UTO-UCI provided in an embodiment of the present application, and FIG. 13 is a second schematic diagram of implementation of determining UTO-UCI provided in an embodiment of the present application.

First, the first sorting mode described above will be described with reference to FIG. 12, that is, sorting is first performed according to the chronological order of TOs, and then sorting is performed for overlapping TOs according to a corresponding CG configuration sequence.

As shown in FIG. 12, it is assumed that 10 TOs are currently included within the first reporting period, which are five TOs corresponding to CG configuration 1 and five TOs corresponding to CG configuration 2, respectively; and it is assumed that among the five TOs corresponding to CG configuration 1, the second TO is an unused TO, and the rest are all used TOs. In addition, it is assumed that among the five TOs corresponding to CG configuration 2, the second TO is a used TO, and the rest are all unused TOs.

Then, sorting is performed in the chronological order of the TOs, and it can be determined with reference to FIG. 12 that the five TOs corresponding to CG configuration 1 and the five TOs corresponding to CG configuration 2 are staggered in sequence. Then, sorting is performed as follows: the bit of the first TO of CG configuration 1, the bit of the first TO of CG configuration 2, the bit of the second TO of CG configuration 1, the bit of the second TO of CG configuration 2, and so on. Thus, UTO-UCI: 0110010101 schematically shown in FIG. 12 is obtained.

Next, the second sorting mode described above will be described with reference to FIG. 13, that is, sorting is first performed in the order of CG configurations, and then sorting is performed for a plurality of TOs configured for each CG in the chronological order of TOs.

In the case of the TOs within the first reporting period in FIG. 13, similar to the above description, the TOs are sorted in the order of the CG configurations, for example, the TOs are first five TOs of CG configuration 1, and then five TOs of CG configuration 2. The five TOs of CG configuration 1 sequentially correspond to bits 01000 in the chronological order of the TOs, and the five TOs of CG configuration 2 sequentially correspond to bits 10111 in the chronological order of the TOs, thereby obtaining UTO-UCI 0100010111 schematically shown in FIG. 13.

Therefore, the technical solution provided by the present application can also effectively solve the problem of coding of UTO-UCI for multiple CG configurations, and based on the contents described above, as long as the UE and the network side agree on the coding and decoding mode, any possible mode can be extended to code UTO-UCI for multiple CG configurations.

The foregoing embodiments describe related implementations on the terminal device side. On the network device side, the first signaling may be sent to the terminal device, and the network device also determines the first TO from among the plurality of TOs within the first reporting period according to the first signaling, and then receives the first indication information on the first TO. Related implementation on the network device side is similar to that on the terminal device side described in the foregoing embodiment, and details are not described herein again.

FIG. 14 is a first schematic structural diagram of an indication information processing apparatus provided in an embodiment of the present application. As shown in FIG. 14, the apparatus 140 includes a receiving module 1401, a processing module 1402, and a sending module 1403.

The receiving module 1401 is configured to receive first signaling sent by a network device.

The processing module 1402 is configured to determine, according to the first signaling, a first transmission occasion (TO) from among a plurality of TOs within a first reporting period, the plurality of TOs being indicated by at least two configured grant (CG) configurations.

The sending module 1403 is configured to send first indication information on the first TO, the first indication information being used to indicate TO usage status within the first reporting period.

In a possible design, the first signaling comprises a first field, and the first field is used to indicate a first CG configuration set permitted for transmission of the first indication information.

In a possible design, the first signaling further comprises a second field, the second field is used to indicate a second CG configuration set, and the first indication information is used to indicate TO usage status of the second CG configuration set within a reporting period.

In a possible design, the first signaling further comprises a third field, and the third field is used to indicate whether physical uplink control channels (PUSCHs) are simultaneously sent on a plurality of overlapping TOs.

In a possible design, the first signaling further comprises a fourth field, and the fourth field is used to indicate whether the first indication information is carried in each of a plurality of simultaneously sent PUSCHs when the PUSCHs are simultaneously sent on the plurality of overlapping TOs.

In a possible design, the processing module 1402 is specifically configured to:
for any TO among the plurality of TOs, if there is no TO overlapping with the TO, and a CG configuration corresponding to the TO is included in the first CG configuration set, determining the TO as the first TO.

In a possible design, the processing module 1402 is specifically configured to:
for any TO among the plurality of TOs, if there is another TO overlapping with the TO, and CG configurations respectively corresponding to the plurality of overlapping TOs are all included in the first CG configuration set, determining the first TO from among the plurality of overlapping TOs according to the third field.

In a possible design, the processing module 1402 is specifically configured to:
if the third field indicates that PUSCHs are not simultaneously sent on the plurality of overlapping TOs, determining a TO indicated as to be used from among the plurality of overlapping TOs as the first TO; and
if the third field indicates that PUSCHs are simultaneously sent on the plurality of overlapping TOs, determining the first TO from among the plurality of overlapping TOs according to the fourth field.

In a possible design, the processing module 1402 is specifically configured to:
if the fourth field indicates that the first indication information is carried in each of the plurality of simultaneously sent PUSCHs, determining each of the plurality of overlapping TOs as the first TO; and
if the fourth field indicates that the first indication information is not carried in each of the plurality of simultaneously sent PUSCHs, determining a target TO among the plurality of overlapping TOs as the first TO.

In a possible design, the target TO is a TO corresponding to a predefined CG configuration among the plurality of overlapping TOs.

In a possible design, the predefined CG configuration is a first CG configuration in the first CG configuration set; or
the predefined CG configuration is a CG configuration with the smallest sequence number in the first CG configuration set.

In a possible design, the first indication information includes bits of TOs corresponding to CG configurations in a second CG configuration set within the first reporting period, and the bits are used to indicate whether the terminal device uses a corresponding TO.

In a possible design, the bits are sorted in a chronological order of the TOs, and for a plurality of TOs that overlap in time, the bits are further sorted in an order of corresponding CG configurations in the second CG configuration set.

In a possible design, the bits are sorted in an order of the CG configurations in the second CG configuration set, and for TOs corresponding to each CG configuration, the bits are further sorted in a chronological order of the TOs.

In a possible design, the first signaling is radio resource control (RRC) signaling.

In a possible design, the first indication information is uplink control information (UCI).

The apparatus provided in this embodiment may be configured to execute the technical solutions of the foregoing method embodiments, and implementation principles and technical effects thereof are similar, and details are not described in this embodiment again.

FIG. 15 is a second schematic structural diagram of an indication information processing apparatus provided in an embodiment of the present application. As shown in FIG. 15, the apparatus 150 includes a sending module 1501, a processing module 1502, and a receiving module 1503.

The sending module 1501 is configured to send first signaling to a terminal device.

The processing module 1502 is configured to determine, according to the first signaling, a first TO from among a plurality of TOs within a first reporting period, the plurality of TOs being indicated by at least two CG configurations.

The receiving module 1503 is configured to receive first indication information on the first TO, the first indication information being used to indicate TO usage status within the first reporting period.

In a possible design, the first signaling comprises a first field, and the first field is used to indicate a first CG configuration set permitted for transmission of the first indication information.

In a possible design, the first signaling further comprises a second field, the second field is used to indicate a second CG configuration set, and the first indication information is used to indicate TO usage status of the second CG configuration set within a reporting period.

In a possible design, the first signaling further comprises a third field, and the third field is used to indicate whether PUSCHs are simultaneously sent on a plurality of overlapping TOs.

In a possible design, the first signaling further comprises a fourth field, and the fourth field is used to indicate whether the first indication information is carried in each of a plurality of simultaneously sent PUSCHs when the PUSCHs are simultaneously sent on the plurality of overlapping TOs.

In a possible design, the processing module 1502 is specifically configured to:
for any TO among the plurality of TOs, if there is no TO overlapping with the TO, and a CG configuration corresponding to the TO is included in the first CG configuration set, determining the TO as the first TO.

In a possible design, the processing module 1502 is specifically configured to:
for any TO among the plurality of TOs, if there is another TO overlapping with the TO, and CG configurations respectively corresponding to the plurality of overlapping TOs are all included in the first CG configuration set, determining the first TO from among the plurality of overlapping TOs according to the third field.

In a possible design, the processing module 1502 is specifically configured to:
if the third field indicates that PUSCHs are not simultaneously sent on the plurality of overlapping TOs, determining a TO indicated as to be used from among the plurality of overlapping TOs as the first TO; and
if the third field indicates that PUSCHs are simultaneously sent on the plurality of overlapping TOs, determining the first TO from among the plurality of overlapping TOs according to the fourth field.

In a possible design, the processing module 1502 is specifically configured to:
if the fourth field indicates that the first indication information is carried in each of the plurality of simultaneously sent PUSCHs, determining each of the plurality of overlapping TOs as the first TO; and
if the fourth field indicates that the first indication information is not carried in each of the plurality of simultaneously sent PUSCHs, determining a target TO among the plurality of overlapping TOs as the first TO.

In a possible design, the target TO is a TO corresponding to a predefined CG configuration among the plurality of overlapping TOs.

In a possible design, the predefined CG configuration is a first CG configuration in the first CG configuration set; or
the predefined CG configuration is a CG configuration with the smallest sequence number in the first CG configuration set.

In a possible design, the first indication information includes bits of TOs corresponding to CG configurations in a second CG configuration set within the first reporting period, and the bits are used to indicate whether the terminal device uses a corresponding TO.

In a possible design, the bits are sorted in a chronological order of the TOs, and for a plurality of TOs that overlap in time, the bits are further sorted in an order of corresponding CG configurations in the second CG configuration set.

In a possible design, the bits are sorted in an order of the CG configurations in the second CG configuration set, and for TOs corresponding to each CG configuration, the bits are further sorted in a chronological order of the TOs.

In a possible design, the first signaling is RRC signaling.

In a possible design, the first indication information is UCI.

The apparatus provided in this embodiment may be configured to execute the technical solutions of the foregoing method embodiments, and implementation principles and technical effects thereof are similar, and details are not described in this embodiment again.

The indication information processing method provided in the embodiments of the present application may be applied to an electronic device having a communication function. The electronic device includes a terminal device. For a specific device form of the terminal device, reference may be made to the above related description, which will not be repeated here.

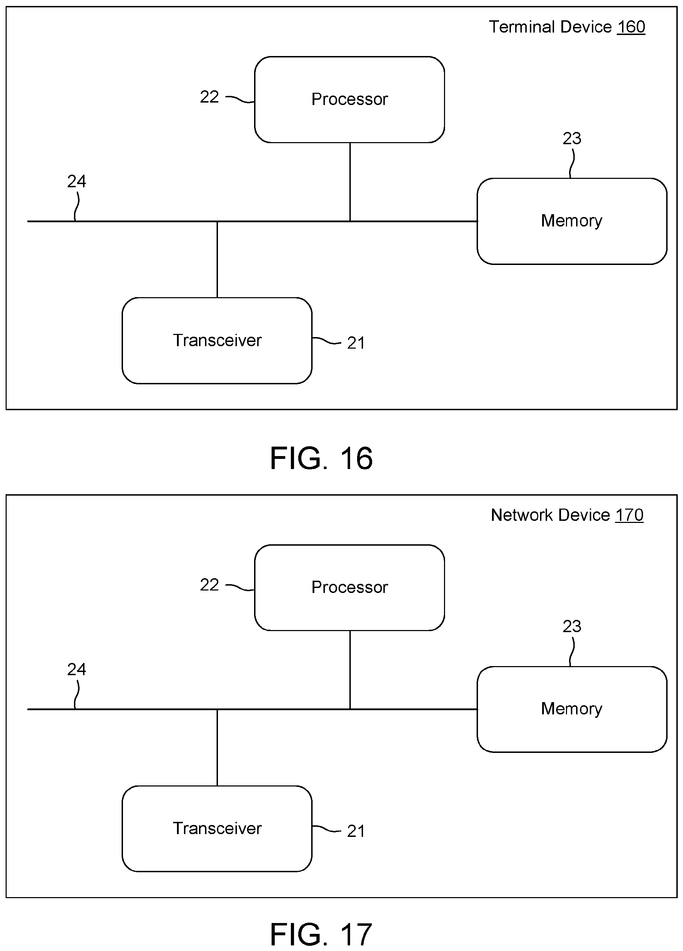

FIG. 16 is a schematic structural diagram of a terminal device provided in an embodiment of the present application. Referring to FIG. 16, a terminal device 160 may include a transceiver 21, a memory 22, and a processor 23. The transceiver 21 may include a transmitter and/or a receiver. The transmitter may also be referred to as a sender, a transmitting machine, a sending port, a sending interface, or other similar terms, and the receiver may also be referred to as a receiver, a receiving machine, a receiving port, a receiving interface, or other similar terms. As an example, the transceiver 21, the memory 22, and the processor 23 are connected to each other by means of a bus 24.

The memory 22 is configured to store program instructions, and the processor 23 is configured to execute the program instructions stored in the memory, so that the terminal device 120 executes the multicast service configuration method shown in any one of the foregoing embodiments. The receiver of the transceiver 21 may be configured to execute a receiving function of the terminal device in the foregoing multicast service configuration method.

FIG. 17 is a schematic structural diagram of a network device provided in an embodiment of the present application. Referring to FIG. 17, the network device 170 may include a transceiver 31, a memory 32, and a processor 33. The transceiver 31 may include a transmitter and/or a receiver. The transmitter may also be referred to as a sender, a transmitting machine, a sending port, a sending interface, or other similar terms, and the receiver may also be referred to as a receiver, a receiving machine, a receiving port, a receiving interface, or other similar terms. For example, the transceiver 31, the memory 32, and the processor 33 are connected to each other by means of a bus 34.

The memory 32 is configured to store program instructions, and the processor 33 is configured to execute the program instructions stored in the memory, so that the network device 130 executes the multicast service configuration method shown in any one of the foregoing embodiments. The receiver of the transceiver 31 may be configured to execute a receiving function of the network device in the foregoing multicast service configuration method.

An embodiment of the present application provides a chip. The chip includes a processor, and the processor is configured to invoke a computer program in a memory, to execute the technical solutions in the foregoing embodiments. The implementation principle and technical effects thereof are similar to those of the above related embodiments, and will not be repeated here.

An embodiment of the present disclosure further provides a computer-readable storage medium. The computer-readable storage medium has a computer program stored thereon. The computer program, when executed by a processor, implements the above method. The methods described in the above embodiments may be implemented wholly or partially by software, hardware, firmware, or any combination thereof. If implemented in software, the functions may be stored as one or more instructions or codes on a computer-readable medium or transmitted over a computer-readable medium. The computer-readable medium may include both a computer storage medium and a communication medium, and may include any medium that can transfer a computer program from one place to another. The storage medium may be any object medium that can be accessed by a computer.

In a possible implementation, the computer-readable medium may include a RAM, a ROM, a compact disc read-only memory (CD-ROM) or another optical disc memory, a magnetic disk memory or another magnetic storage device, or any other medium that is targeted to carry or that stores required process code in a form of an instruction or a data structure and that can be accessed by a computer. Moreover, any connection is properly referred to as a computer-readable medium. For example, if the software is transmitted from a website, a server, or other remote source using a coaxial cable, a fiber optic cable, a twisted pair, a digital subscriber line (DSL), or wireless technologies (such as infrared, radio, and microwave), then the coaxial cable, the fiber optic cable, the twisted pair, the DSL, or wireless technologies such as infrared, radio, and microwave are included in the definition of the medium. The magnetic disk and optical disc as used herein includes an optical disc, a laser disc, an optical disc, a digital versatile disc (DVD), a floppy disk and a Blu-ray disc, wherein the magnetic disk usually reproduces data magnetically, and the optical disc reproduces data optically with laser. Combinations of the above should also be included within the scope of the computer-readable medium.

An embodiment of the present application provides a computer program product, wherein the computer program product includes a computer program, and the computer program, when run, causes a computer to execute the foregoing method.

The embodiments of the present disclosure are described with reference to flowcharts and/or block diagrams of the method, the device (system), and the computer program product according to the embodiments of the present disclosure. It should be understood that each flow and/or block in the flowcharts and/or block diagrams and a combination of flows and/or blocks in the flowcharts and/or block diagrams may be implemented by computer program instructions. These computer program instructions may be provided to a processing unit of a general-purpose computer, a special-purpose computer, an embedded processor, or another programmable device to generate a machine, so that the instructions executed by the processing unit of the computer or another programmable data processing device generate an apparatus for implementing a specific function in one or more processes in the flowcharts and/or in one or more blocks in the block diagrams.

The above specific embodiments further describe the objectives, technical solutions, and beneficial effects of the present disclosure in detail, and it should be understood that the above are only specific embodiments of the present disclosure and are not intended to limit the scope of protection of the present disclosure, and any modifications, equivalent replacements, improvements, etc. made on the basis of the technical solutions of the present disclosure should be included in the scope of protection of the present disclosure.

## Claims

1. An indication information processing method, **characterized in that**: the method is applied to a terminal device, and comprises:
receiving first signaling sent by a network device;
determining, according to the first signaling, a first transmission occasion (TO) from among a plurality of TOs within a first reporting period, the plurality of TOs being indicated by at least two configured grant (CG) configurations; and
sending first indication information on the first TO, the first indication information being used to indicate TO usage status within the first reporting period.

2. The method according to claim 1, wherein the first signaling comprises a first field, and the first field is used to indicate a first CG configuration set permitted for transmission of the first indication information.

3. The method according to claim 1 or 2, wherein the first signaling further comprises a second field, the second field is used to indicate a second CG configuration set, and the first indication information is used to indicate TO usage status of the second CG configuration set within a reporting period.

4. The method according to any one of claims 1 to 3, wherein the first signaling further comprises a third field, and the third field is used to indicate whether physical uplink control channels (PUSCHs) are simultaneously sent on a plurality of overlapping TOs.

5. The method according to any one of claims 1 to 4, wherein the first signaling further comprises a fourth field, and the fourth field is used to indicate whether the first indication information is carried in each of a plurality of simultaneously sent PUSCHs when the PUSCHs are simultaneously sent on a plurality of overlapping TOs.

6. The method according to any one of claims 1 to 5, wherein the determining, according to the first signaling, a first TO from among a plurality of TOs within a first reporting period comprises:
for any TO among the plurality of TOs, if there is no TO overlapping with the TO, and a CG configuration corresponding to the TO is included in the first CG configuration set, determining the TO as the first TO.

7. The method according to any one of claims 1 to 5, wherein the determining, according to the first signaling, a first TO from among a plurality of TOs within a first reporting period comprises:
for any TO among the plurality of TOs, if there is another TO overlapping with the TO, and CG configurations respectively corresponding to a plurality of overlapping TOs are all included in the first CG configuration set, determining the first TO from among the plurality of overlapping TOs according to the third field.

8. The method according to claim 7, wherein the determining the first TO from among the plurality of overlapping TOs according to the third field comprises:
if the third field indicates that PUSCHs are not simultaneously sent on the plurality of overlapping TOs, determining a TO indicated as to be used from among the plurality of overlapping TOs as the first TO; and
if the third field indicates that PUSCHs are simultaneously sent on the plurality of overlapping TOs, determining the first TO from among the plurality of overlapping TOs according to the fourth field.

9. The method according to claim 8, wherein the determining the first TO from among the plurality of overlapping TOs according to the fourth field comprises:
if the fourth field indicates that the first indication information is carried in each of the plurality of simultaneously sent PUSCHs, determining each of the plurality of overlapping TOs as the first TO; and
if the fourth field indicates that the first indication information is not carried in each of the plurality of simultaneously sent PUSCHs, determining a target TO among the plurality of overlapping TOs as the first TO.

10. The method according to claim 9, wherein the target TO is a TO corresponding to a predefined CG configuration among the plurality of overlapping TOs.

11. The method according to claim 10, wherein the predefined CG configuration is a first CG configuration in the first CG configuration set; or
the predefined CG configuration is a CG configuration with the smallest sequence number in the first CG configuration set.

12. The method according to any one of claims 3 to 11, wherein the first indication information includes bits of TOs corresponding to CG configurations in a second CG configuration set within the first reporting period, and the bits are used to indicate whether the terminal device uses a corresponding TO.

13. The method according to claim 12, wherein the bits are sorted in a chronological order of the TOs, and for a plurality of TOs that overlap in time, the bits are further sorted in an order of corresponding CG configurations in the second CG configuration set.

14. The method according to claim 12, wherein the bits are sorted in an order of the CG configurations in the second CG configuration set, and for TOs corresponding to each CG configuration, the bits are further sorted in a chronological order of the TOs.

15. The method according to any one of claims 1 to 14, wherein the first signaling is radio resource control (RRC) signaling.

16. The method according to any one of claims 1 to 15, wherein the first indication information is uplink control information (UCI).

17. An indication information processing method, **characterized in that**: the method is applied to a network device, and comprises:
sending first signaling to a terminal device;
determining, according to the first signaling, a first TO from among a plurality of TOs within a first reporting period, the plurality of TOs being indicated by at least two CG configurations; and
receiving first indication information on the first TO, the first indication information being used to indicate TO usage status within the first reporting period.

18. The method according to claim 17, wherein the first signaling comprises a first field, and the first field is used to indicate a first CG configuration set permitted for transmission of the first indication information.

19. The method according to claim 17 or 18, wherein the first signaling further comprises a second field, the second field is used to indicate a second CG configuration set, and the first indication information is used to indicate TO usage status of the second CG configuration set within a reporting period.

20. The method according to any one of claims 17 to 19, wherein the first signaling further comprises a third field, and the third field is used to indicate whether PUSCHs are simultaneously sent on a plurality of overlapping TOs.

21. The method according to any one of claims 17 to 20, wherein the first signaling further comprises a fourth field, and the fourth field is used to indicate whether the first indication information is carried in each of a plurality of simultaneously sent PUSCHs when the PUSCHs are simultaneously sent on a plurality of overlapping TOs.

22. The method according to any one of claims 17 to 21, wherein the determining, according to the first signaling, a first TO from among a plurality of TOs within a first reporting period comprises:
for any TO among the plurality of TOs, if there is no TO overlapping with the TO, and a CG configuration corresponding to the TO is included in the first CG configuration set, determining the TO as the first TO.

23. The method according to any one of claims 17 to 21, wherein the determining, according to the first signaling, a first TO from among a plurality of TOs within a first reporting period comprises:
for any TO among the plurality of TOs, if there is another TO overlapping with the TO, and CG configurations respectively corresponding to a plurality of overlapping TOs are all included in the first CG configuration set, determining the first TO from among the plurality of overlapping TOs according to the third field.

24. The method according to claim 23, wherein the determining the first TO from among the plurality of overlapping TOs according to the third field comprises:
if the third field indicates that PUSCHs are not simultaneously sent on the plurality of overlapping TOs, determining a TO indicated as to be used from among the plurality of overlapping TOs as the first TO; and
if the third field indicates that PUSCHs are simultaneously sent on the plurality of overlapping TOs, determining the first TO from among the plurality of overlapping TOs according to the fourth field.

25. The method according to claim 24, wherein the determining the first TO from among the plurality of overlapping TOs according to the fourth field comprises:
if the fourth field indicates that the first indication information is carried in each of the plurality of simultaneously sent PUSCHs, determining each of the plurality of overlapping TOs as the first TO; and
if the fourth field indicates that the first indication information is not carried in each of the plurality of simultaneously sent PUSCHs, determining a target TO among the plurality of overlapping TOs as the first TO.

26. The method according to claim 25, wherein the target TO is a TO corresponding to a predefined CG configuration among the plurality of overlapping TOs.

27. The method according to claim 26, wherein the predefined CG configuration is a first CG configuration in the first CG configuration set; or
the predefined CG configuration is a CG configuration with the smallest sequence number in the first CG configuration set.

28. The method according to any one of claims 19 to 27, wherein the first indication information includes bits of TOs corresponding to CG configurations in a second CG configuration set within the first reporting period, and the bits are used to indicate whether the terminal device uses a corresponding TO.

29. The method according to claim 28, wherein the bits are sorted in a chronological order of the TOs, and for a plurality of TOs that overlap in time, the bits are further sorted in an order of corresponding CG configurations in the second CG configuration set.

30. The method according to claim 28, wherein the bits are sorted in an order of the CG configurations in the second CG configuration set, and for TOs corresponding to each CG configuration, the bits are further sorted in a chronological order of the TOs.

31. The method according to any one of claims 17 to 20, wherein the first signaling is RRC signaling.

32. The method according to any one of claims 17 to 31, wherein the first indication information is UCI.

33. An indication information processing apparatus, **characterized by** comprising:
a receiving module, configured to receive first signaling sent by a network device;
a processing module, configured to determine, according to the first signaling, a first transmission occasion (TO) from among a plurality of TOs within a first reporting period, the plurality of TOs being indicated by at least two configured grant (CG) configurations; and
a sending module, configured to send first indication information on the first TO, the first indication information being used to indicate TO usage status within the first reporting period.

34. An indication information processing apparatus, **characterized by** comprising:
a sending module, configured to send first signaling to a terminal device;
a processing module, configured to determine, according to the first signaling, a first TO from among a plurality of TOs within a first reporting period, the plurality of TOs being indicated by at least two CG configurations; and
a receiving module, configured to receive first indication information on the first TO, the first indication information being used to indicate TO usage status within the first reporting period.

35. A terminal device, **characterized by** comprising: a processor and a memory;
wherein the memory stores computer-executable instructions; and
the processor executes the computer-executable instructions stored in the memory, such that the terminal device executes the method according to any one of claims 1 to 16.

36. A network device, **characterized by** comprising: a processor and a memory;
wherein the memory stores computer-executable instructions; and
the processor executes the computer-executable instructions stored in the memory, such that the network device executes the method according to any one of claims 17 to 32.

37. A computer-readable storage medium, having a computer program stored therein, **characterized in that**: when the computer program is executed by a processor, the method according to any one of claims 1 to 32 is implemented.

38. A computer program product, **characterized by** comprising a computer program, wherein when the computer program is run, a computer is caused to execute the method according to any one of claims 1 to 32.
